(19) Europäisches Patentamt
European Patent Office
Office européen des brevets

(11) **EP 4 635 616 A1**

(12) # EUROPEAN PATENT APPLICATION
published in accordance with Art. 153(4) EPC

(43) Date of publication:
**22.10.2025 Bulletin 2025/43**

(21) Application number: **23902099.3**

(22) Date of filing: **04.07.2023**

(51) International Patent Classification (IPC):
**B01J** (2006.01)

(86) International application number:
**PCT/CN2023/105653**

(87) International publication number:
**WO 2024/124889 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 CN 202211625008
16.12.2022 CN 202211625652**

(71) Applicants:
• **China Petroleum & Chemical Corporation
Beijing 100728 (CN)**
• **Sinopec Dalian Research Institute of
Petroleum and Petrochemicals Co., Ltd.
Lushunkou District
Dalian, Liaoning 116045 (CN)**

(72) Inventors:
• **QIAO, Kai
Dalian, Liaoning 116045 (CN)**
• **ZHANG, Xia
Dalian, Liaoning 116045 (CN)**
• **WANG, Haibo
Dalian, Liaoning 116045 (CN)**
• **GOU, Lianke
Dalian, Liaoning 116045 (CN)**
• **LI, Lanpeng
Dalian, Liaoning 116045 (CN)**

(74) Representative: **karo IP
Patentanwälte PartG mbB
Steinstraße 16-18
40212 Düsseldorf (DE)**

(54) **CATALYST MOLDED BODY**

(57) The present invention relates to a catalyst shaped body, comprising a column body extending in a longitudinal direction, the column body having a cross section perpendicular to the longitudinal direction. The cross section has a central through hole, at least four first corners and first recesses with the same number as the first corners; the at least four first corners are arranged at the same angular intervals in a circumferential direction to define a first circumscribed circle of an outer contour of the catalyst shaped body, each first corner is tangent to the first circumscribed circle, and the at least four first corners are rotationally symmetric with respect to a center of the first circumscribed circle; the first corners and the first recesses are alternately arranged in the circumferential direction, the first corners and the first recesses have different geometric shapes, the first corners are an outwardly convex part of a first ellipse with a ratio of a major axis to a minor axis greater than 1.2, and the first recesses are inwardly concave arcs tangent to the two adjacent first corners, so as to avoid bite between the first corners and/or the first recesses of the catalyst shaped body and the first recesses and/or the first corners of adjacent catalyst shaped bodies.

FIG. 2

EP 4 635 616 A1

## Description

Technical Field

The present invention relates to catalyst, and in particular to shaped catalyst bodies.

Background

The information disclosed in this background section is only intended to enhance understanding of the overall background of the invention and should not be regarded as admitting or implying in any way that the information constitutes the prior art already known to those skilled in the art.

Catalysts are usually prepared into catalyst shaped bodies, and are then filled into reactors/reaction tubes for catalytic use. Different appearance shapes prepared by the catalysts will affect usage performance of the catalysts. The appearance shapes of traditional catalysts include cylindrical, Raschig ring shaped, clover shaped, four-leaf clover shaped, toothed ball shaped, and bird's nest shaped or the like.

Currently, cylindrical or hollow cylindrical catalysts are common in the industry. However, cylindrical catalyst particles have channel flow and wall flow phenomenon, which makes gas flow uneven when passing through, affecting reaction efficiency, and outer surface area is small, catalyst production capacity is low; at the same time, a pressure drop of cylindrical catalyst particles is relatively large, which causes a relatively large energy consumption load on production equipment.

In recent years, irregular-shaped structure of catalyst particles has been proposed, porosity in a catalyst bed layer is increased by the irregular-shaped structure to reduce the pressure drop of the catalyst in the reactor bed layer and improve the production capacity of the catalyst. However, the existing irregular-shaped catalyst shaped bodies have a complex structure and are not easy to produce and mold; irregular edges and corners are easy to wear during transportation and use, mechanical strength is low, crushing resistance is poor, wear resistance is poor, and it is difficult to ensure structural integrity during transportation, filling and high space velocity operation of the catalyst. The catalyst breakage and wear will instead further increase the pressure drop in the catalyst bed layer, increasing the energy consumption load of the production equipment.

CN102784666A discloses a solid catalyst particle, an outer contour of a radial cross-section of the catalyst particle is in a continuous, smooth undulating shape. This continuous smooth undulating outer contour is composed of curve segments with the following characteristics: a group of circles with a number (N) and a radius ($\alpha$); making circumscribed circles of these three circles: an inscribed circle of the outer contour and two adjacent circles with a radius ($\alpha$), these circumscribed circles form another group of circles also with the number (N); the circles from these two groups with the same number (N) are circumscribed respectively to each other, and two corresponding tangent points are formed on each circle, and inferior arc between the two tangent points is taken, and all these inferior arcs are connected end to end to form this continuous smooth undulating outer contour of the cross section. However, outwardly convex arc and inwardly concave arc of the outer contour of adjacent catalyst particles bite each other, thereby increasing contact area between the catalyst particles.

Summary

The present invention is intended to provide a catalyst shaped body, which can reduce contact area between catalyst particles, avoid bite between the outwardly convex arc and the inwardly concave arc of the outer contour of the particles, increase the porosity of the bed layer, and reduce filling packing ratio of the catalyst bed layer.

According to one aspect of the present invention, a catalyst shaped body is provided, comprising a column body extending in a longitudinal direction, the column body having a cross section perpendicular to the longitudinal direction. The cross section has a central through hole, at least four first corners and first recesses with the same number as the first corners; the at least four first corners are arranged at the same angular intervals in a circumferential direction to define a first circumscribed circle of an outer contour of the catalyst shaped body, each first corner is tangent to the first circumscribed circle, and the at least four first corners are rotationally symmetric with respect to a center of the first circumscribed circle; the first corners and the first recesses are alternately arranged in the circumferential direction, the first corners and the first recesses have different geometric shapes, the first corners are an outwardly convex part of a first ellipse with a ratio of a major axis to a minor axis greater than 1.2, and the first recesses are inwardly concave arcs tangent to the two adjacent first corners, so as to avoid bite between the first corners and/or the first recesses of the catalyst shaped body and the first recesses and/or the first corners of adjacent catalyst shaped bodies.

Preferably, a line connecting a center of the first ellipse and the center of the first circumscribed circle is perpendicular to the major axis of the first ellipse, and a ratio of major axis length of the first ellipse to a radius of the first circumscribed circle is 0.2 to 1.

Preferably, the central through hole has second corners with the same number as the first corners and second recesses with the same number as the first recesses, the second corners define a second circumscribed circle of the central through hole, the first corners and the second corners are aligned in the circumferential direction, each second corner is tangent to the second circumscribed circle, and the second corners are rotationally symmetric relative to a center of the second circumscribed circle, the first recesses and the second recesses are aligned in the circumferential direction, each second corner is a outwardly convex part of a second ellipse, and the second recess is an inwardly concave arc tangent to two adjacent second corners.

Preferably, a ratio of a major axis to a minor axis of the second ellipse is equal to the ratio of the major axis to the minor axis of the first ellipse.

Preferably, a ratio of an area of the second circumscribed circle of the central through hole to an area of the first circumscribed circle of the outer contour of the catalyst shaped body is 0.17 to 0.34.

Preferably, each first recess is tangent to the first inscribed circle, the first ellipse corresponding to each first corner is tangent to the second inscribed circle, the first inscribed circle and the second inscribed circle are concentric with the first circumscribed circle, and a radius of the first inscribed circle is greater than a radius of the second inscribed circle.

Preferably, a height of the catalyst shaped body in the longitudinal direction is greater than or equal to the radius of the first circumscribed circle of the outer contour of the catalyst shaped body.

Preferably, the radius of the first circumscribed circle of the outer contour of the catalyst shaped body is 2 mm to 5 mm.

Preferably, the radius of the first circumscribed circle of the outer contour of the catalyst shaped body is 3 mm to 4 mm.

Preferably, the catalyst shaped body is filled in a reaction tube for catalytic use, and a ratio of a radius of the reaction tube to the radius of the first circumscribed circle is 2 to 7.

The catalyst shaped body provided by the present invention forms a polygonal star-shaped catalyst particle profile by providing arc-shaped first recesses and elliptical first corners. The first corners and the first recesses have different geometric shapes. This design can reduce a contact area between catalyst particles to avoid the bite between the first corner and/or the first recess of the catalyst shaped body and the first recess and/or the first corner of adjacent catalyst shaped bodies, improving a porosity of bed layer and reducing a filling packing ratio of the catalyst bed layer, thereby achieving the purpose of realizing the pressure drop of the catalyst bed layer.

The catalyst of the present invention preferably has a central through hole, and effectively increases outer surface area of the catalyst particles and strength of the particles by parameter design of the central through hole, further significantly improves the porosity of the catalyst bed layer, and alleviates increase in pressure drop of bed layer in industrial equipment.

The central through hole of the catalyst of the present invention preferably has a contour similar to the outer contour of the catalyst, which can reduce wall thickness of the catalyst and thus save costs.

A packing density of the catalyst of the present invention is reduced, a catalyst performance is improved, product yield per unit mass of the catalyst is increased, and production capacity of the catalyst is improved.

The catalyst provided by the present invention has a cylindrical geometric main body, and the catalyst shaped body has good mechanical properties, is easy to manufacture, can be molded under low pressure, has high mechanical strength, and the crushing resistance is strong; it has no irregular edges and corners, is easy to produce, has good wear resistance, is not easy to break, has good mechanical stability, reduces loss of the catalyst shaped body during transportation and use, can ensure structural integrity during transportation, filling and high space velocity operation, and effectively reduces the increase in pressure drop of catalyst bed layer caused by catalyst breakage and wear.

The above features and advantages, and other features and advantages, of the present teachings are readily apparent from the following detailed description of some of the best modes and other embodiments for carrying out the present teachings, as defined in the appended claims, when taken in connection with the accompanying drawings.

Brief Description of Drawings

In order to more clearly illustrate the technical solutions in the present invention or the prior art, the drawings required for use in describing embodiments or the prior art will be briefly introduced below. Obviously, the drawings described below are some embodiments of the present invention. For those skilled in the art, other drawings can be obtained based on these drawings without creative work.

FIG. 1 is a perspective structural schematic view of a catalyst shaped body provided in the first embodiment of the present invention;
FIG. 2 is a cross-sectional schematic view of the catalyst shaped body provided in the first embodiment of the present invention;
FIG. 3 is a perspective structural schematic view of a catalyst shaped body provided in the second embodiment of the present invention;

FIG. 4 is a cross-sectional schematic view of the catalyst shaped body provided in the second embodiment of the present invention;

FIG. 5 is a perspective structural schematic view of a catalyst shaped body provided in the third embodiment of the present invention;

FIG. 6 is a cross-sectional schematic view of the catalyst shaped body provided in the third embodiment of the present invention;

FIG. 7 is a perspective structural schematic view of a catalyst shaped body provided in the fourth embodiment of the present invention;

FIG. 8 is a cross-sectional schematic view of the catalyst shaped body provided in the fourth embodiment of the present invention;

FIG. 9 is a perspective structural schematic view of catalyst shaped body provided in the fifth embodiment of the present invention;

FIG. 10 is a cross-sectional schematic view of the catalyst shaped body provided in the fifth embodiment of the present invention;

FIG. 11 is a perspective structural schematic view of a catalyst shaped body provided in the sixth embodiment of the present invention;

FIG. 12 is a cross-sectional schematic view of the catalyst shaped body provided in the sixth embodiment of the present invention;

FIG. 13 is a perspective structural schematic view of a catalyst shaped body provided in the seventh embodiment of the present invention;

FIG. 14 is a cross-sectional schematic view of the catalyst shaped body provided in the seventh embodiment of the present invention;

FIG. 15 is a perspective structural schematic view of a catalyst shaped body provided in the eighth embodiment of the present invention;

FIG. 16 is a cross-sectional schematic view of the catalyst shaped body provided in the eighth embodiment of the present invention;

FIG. 17 is a perspective structural schematic view of a catalyst shaped body provided in the ninth embodiment of the present invention;

FIG. 18 is a cross-sectional schematic view of the catalyst shaped body provided in the ninth embodiment of the present invention.

Reference numerals:

100: catalyst shaped body;
101: first circumscribed circle;
102: first inscribed circle;
103: second inscribed circle;
1: central through hole;
2: first corner;
3: first recess;
201: second circumscribed circle;
202: second corner;
203: second recess.

The present disclosure is amenable to various modifications and alternative forms, and some representative embodiments are shown by way of example in the drawings and will be described in detail herein. However, novel aspects of this disclosure are not limited to the particular forms illustrated in the above-enumerated drawings. Rather, the disclosure covers modifications, equivalents, combinations, groupings, and alternatives falling within the scope of the disclosure as encompassed, for example, by the appended claims. Additionally, the appended drawings are not necessarily to scale, and may present a simplified representation of various preferred features of the present disclosure as disclosed herein.

Detailed Description of Embodiments

Specific implementation of the present invention is described in detail below in conjunction with the drawings, but it should be understood that a protection scope of the present invention is not limited by the specific implementation. Referring to the accompanying drawings, the same reference numerals throughout several drawings correspond to the same or similar components.

In order to make the object, technical solution and advantages of the present invention clearer, the technical solution of the present invention will be clearly and completely described below in conjunction with the drawings of the present invention. Obviously, the described embodiments are part of the embodiments of the present invention, not all of the embodiments. Based on the embodiments of the present invention, all other embodiments obtained by those skilled in the art without creative work are within the protection scope of the present invention.

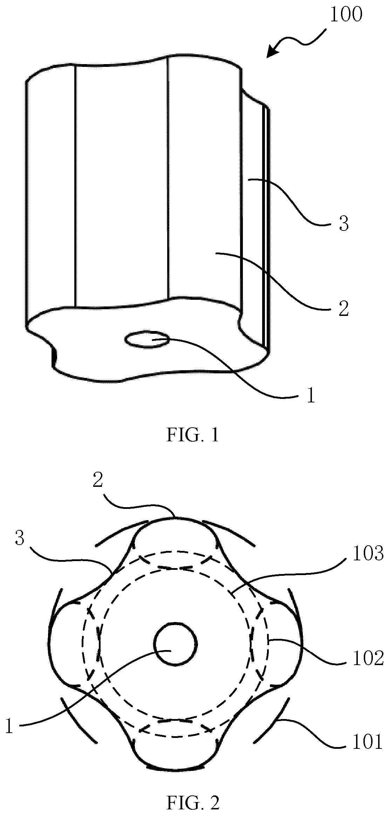

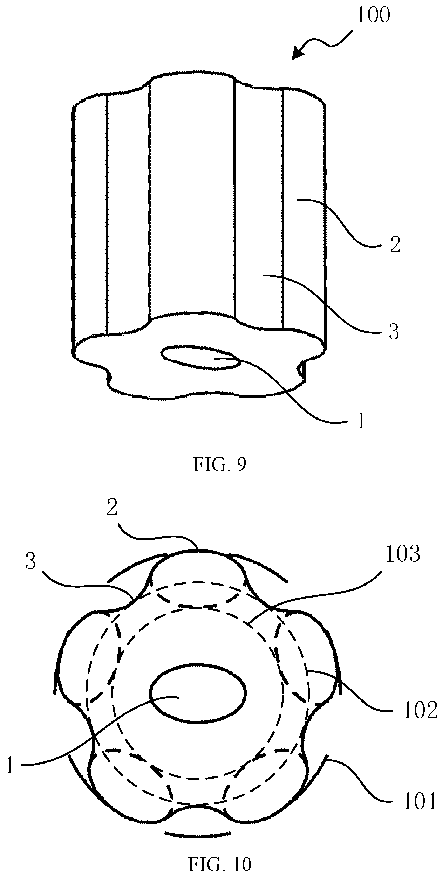

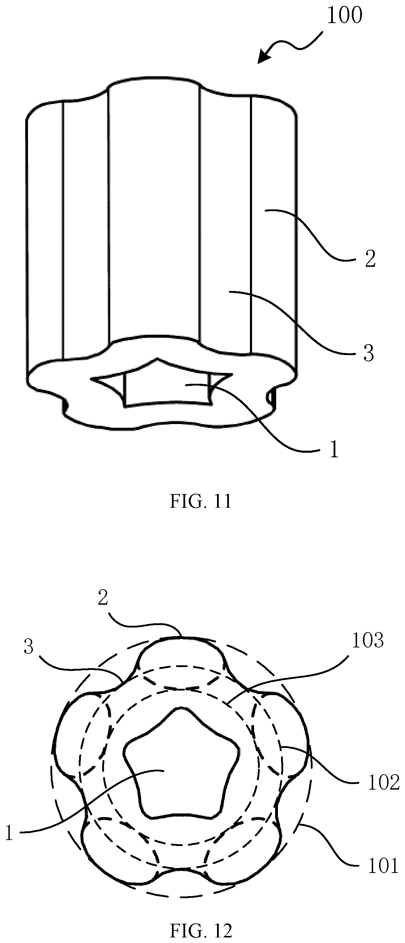

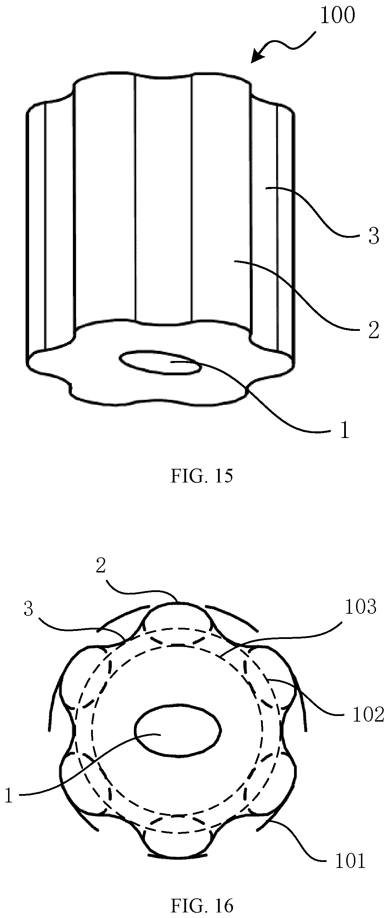

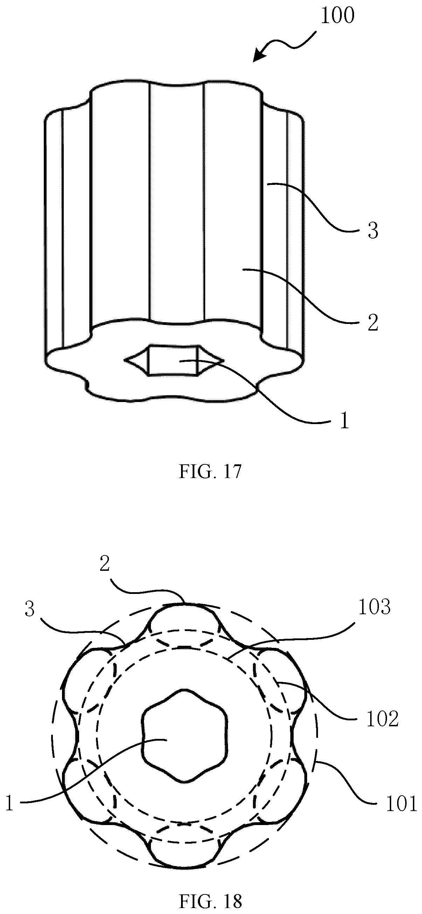

The catalyst shaped body of the present invention will be described below with reference to FIG. 1 to FIG. 18.

As shown in FIG. 1 to FIG. 18, the catalyst shaped body 100 provided by the present invention is a column body extending in a longitudinal direction, and the column body has a cross section perpendicular to the longitudinal direction. The column body is formed by sweeping the cross section perpendicular to the height direction/longitudinal direction in the height direction. Wherein the cross section has a central through hole 1, at least four first corners 2, and first recesses 3 with the same number as the first corners 2.

The at least four first corners 2 are arranged at the same angular intervals along a circumferential direction to define a first circumscribed circle 101 of an outer contour of the catalyst shaped body, each first corner 2 is tangent to the first circumscribed circle 101, and the at least four first corners 2 are rotationally symmetric relative to a center of the first circumscribed circle 101.

The first corners 2 and the first recesses 3 are alternately arranged in the circumferential direction, and the first corners 2 and the first recesses 3 have different geometric shapes. Specifically, the first corners 2 are an outwardly convex part of a first ellipse with a ratio of a major axis to a minor axis greater than 1.2, and the first recesses 3 are an inwardly concave arc tangent to two adjacent first corners 2 to avoid bite between the first corner 2 and/or the first recess 3 of the catalyst shaped body and the first recess 3 and/or the first corner 2 of adjacent catalyst shaped bodies.

One first recess 3 is connected between any two adjacent first corners 2, and the first recess 3 is an inwardly concave arc tangent to the two adjacent first corners 2; the central through hole 1 is concentric with the first circumscribed circle 101 of the cross section.

In this embodiment, the catalyst shaped body 100 is a column body formed by sweeping the cross section along the height direction. Since the cross section has a central through hole 1, at least four first corners 2 and at least four first recesses 3, the catalyst shaped body 100 also has a central through hole 1, at least four first corners 2 and at least four first recesses 3; by arranging the at least four first corners 2 to be spaced circumferentially along the first circumscribed circle 101, and each first corner 2 is tangent to the first circumscribed circle 101, geometric main body of the catalyst shaped body 100 enclosed by the at least four first corners 2 is a cylinder. At the same time, the at least four first corners 2 are rotationally symmetric relative to the center of the first circumscribed circle 101, that is, each first corner 2 can be rotated around the center of the first circumscribed circle 101 to coincide with any one first corner 2, so each first corner 2 is a part of a first ellipse of the same shape and size; the first recess 3 is tangentially connected between every two first corners 2, and the first recess 3 being the inwardly concave arc forms an arc-shaped open flow channel outside of the catalyst shaped body 100, and the central through hole 1 forms an open flow channel inside of the catalyst shaped body 100.

When preparing the catalyst shaped body 100 of the present invention, a molding die is manufactured according to the shape of the catalyst shaped body 100 of the present invention, and then the catalyst matrix powder or carrier is mixed and placed in the molding die for compression molding, so that catalyst particles having the shape of the catalyst shaped body 100 of the present invention can be obtained, and the preparation is simple.

The catalyst shaped body 100 of the present invention is suitable for being filled in a fixed bed reactor for catalytic use. For example, the fixed bed reactor may be an industrial tubular reactor.

The catalyst shaped body 100 of the present invention forms a polygonal star-shaped catalyst particle profile with the central through hole 1 by providing the central through hole 1, first corners 2 and first recesses 3, which effectively increases outer surface area of the catalyst particles and significantly improves porosity in the catalyst bed layer, thereby facilitating alleviating increase in the pressure drop of the catalyst bed layer in the industrial production equipment, reducing the pressure drop of the catalyst in the catalyst bed layer under high space velocity operation in the reactor, improving reaction efficiency of the catalyst, increasing duration of catalyst activity, effectively extending operation cycle of the catalyst, and reducing packing density of the catalyst, improving catalyst performance, increasing product yield per unit mass of the catalyst, and improving production capacity of the catalyst; at the same time, the geometric main body is a cylinder, so that the catalyst shaped body 100 has good mechanical properties, is easy to manufacture, can be molded under low pressing or pushing pressure, has high mechanical strength, and the crushing resistance is strong; by providing the first corners 2 as an ellipse and the first recesses 3 as an inwardly concave arc, the catalyst shaped body 100 has no irregular edges and corners, is easy to produce, is not easy to break, has good wear resistance, is not easy to wear, has good mechanical stability, and reduces loss of the catalyst shaped body 100 during transportation and use, and can ensure structural integrity during transportation, filling and high space velocity operation, effectively reduce an increase in pressure drop of catalyst bed layer caused by catalyst breakage and wear, and solve the defects of the prior art that the irregular-shaped catalyst bodies are difficult to produce and mold, have poor crushing resistance and poor wear resistance, and are difficult to ensure structural integrity during catalyst transportation, filling and high space velocity operation.

In some embodiments, as shown in FIG. 1 to FIG. 6, the number of the first corners 2 is four, the number of the first recesses 3 is also four, and the catalyst shaped body 100 forms a four-corner star-shaped catalyst particle.

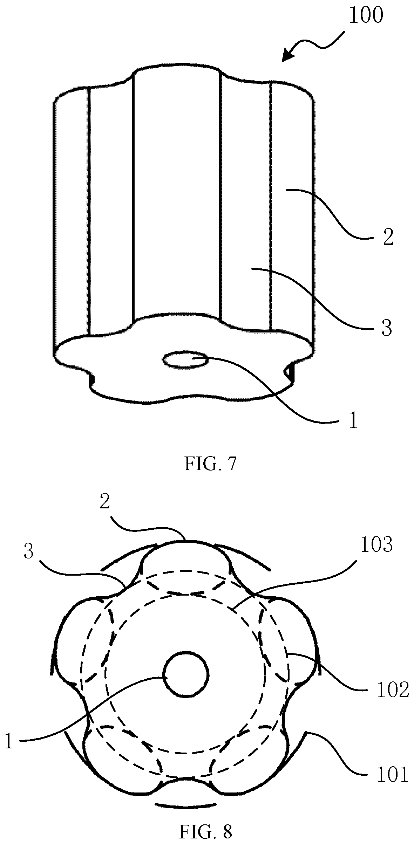

In other embodiments, as shown in FIG. 7 to FIG. 12, the number of the first corners 2 is five, the number of the first recesses 3 is five, and the catalyst shaped body 100 forms a five-corner star-shaped catalyst particle.

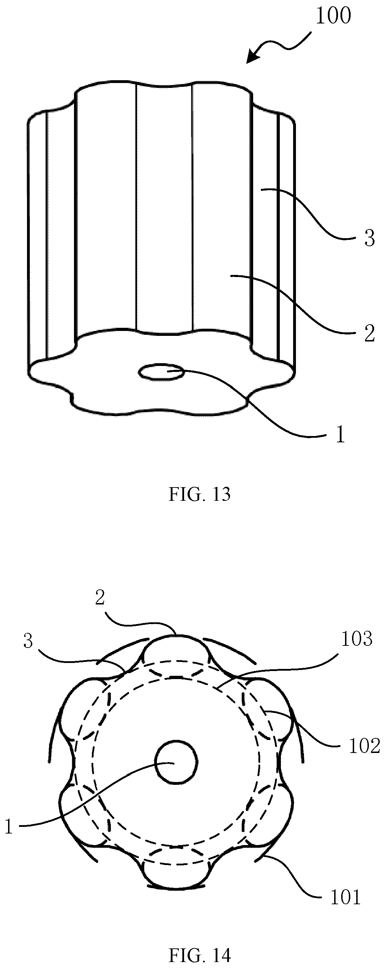

In yet other embodiments, as shown in FIG. 13 to FIG. 18, the number of the first corners 2 is six, the number of the first recesses 3 is six, and the catalyst shaped body 100 forms a hexagonal star-shaped catalyst particle.

Specifically, the height of the catalyst shaped body 100 is greater than or equal to the radius of the first circumscribed circle 101.

In this embodiment, the geometric sizes of the catalyst shaped body 100 are key factors affecting the catalyst filling packing ratio and mass transfer and heat transfer. By providing the height of the catalyst shaped body 100 to be greater than or equal to the radius of the first circumscribed circle 101, the catalyst can have a lower packing density, which is beneficial to improving the catalyst performance and increasing the production capacity of catalyst.

More specifically, the radius of the first circumscribed circle 101 of the cross section of the catalyst shaped body 100 is 2 mm to 5 mm.

In this embodiment, the diameter of the reaction tube for oxidation reactions is generally 20-30 mm. By providing the radius of the first circumscribed circle 101 of the cross section of the catalyst shaped body 100 to be 2 mm to 5 mm, the geometric size of the catalyst shaped body 100 is better, the packing density of the catalyst is better, the catalyst performance is improved, and the product yield per unit mass of the catalyst is increased.

Preferably, the radius of the first circumscribed circle 101 of the cross section of the catalyst shaped body 100 is 3 mm to 4 mm.

More specifically, the height of the catalyst shaped body 100 is 3 mm to 10 mm.

In this embodiment, the diameter of the reaction tube for oxidation reactions is generally 20-30 mm. By providing the height of the catalyst shaped body 100 to be 3 mm to 10 mm, the catalyst shaped body 100 has better geometric size and the packing density of the catalyst is better, which is beneficial to improving the catalyst performance and further increasing the product yield per unit mass of the catalyst.

Preferably, the height of the catalyst shaped body 100 is 4 mm to 7 mm.

Specifically, the angle between lines connecting centers of any two adjacent first corners 2 to the center of the first circumscribed circle 101 is 5° -90 °.

In this embodiment, the at least four first corners 2 are distributed at a circumferential interval angle along the first circumscribed circle 101. The positions of the first corners 2 are defined by the interval angles between the first corners 2. The specific interval angles are set according to the number of the first corners 2, and the interval angle between any two adjacent first corners 2 is 5°-90 °, avoiding concentrated distribution of the first corners 2 of the catalyst shaped body 100, which is beneficial to reducing the pressure drop of the catalyst bed layer and improving the reaction efficiency of the catalyst.

In some embodiments, the at least four first corners 2 are distributed at equal angular intervals in the circumferential direction along the first circumscribed circle 101 of the cross section.

In this embodiment, by providing the first corners 2 to be evenly distributed in the circumferential direction along the first circumscribed circle 101, the gas passes through more evenly, the reaction efficiency of the catalyst is higher, the catalyst shaped body 100 is subjected to uniform force in all directions, and is not easy to wear, which is beneficial to improving the crushing resistance of the catalyst shaped body 100, and has better mechanical stability, reduces the loss of the catalyst shaped body 100 during transportation and use, and reduces the increase in catalyst bed layer pressure drop caused by catalyst breakage and wear.

The catalyst shaped body provided by the present invention forms a polygonal star-shaped catalyst particle profile by providing arc-shaped first recesses and elliptical first corners. The first corners and the first recesses have different geometric shapes. This design can reduce the contact area between the catalyst particles to avoid the bite between the first corner and/or the first recess of the catalyst shaped body and the first recess and/or the first corner of adjacent catalyst shaped bodies, improving the porosity of bed layer and reducing the filling packing ratio of the catalyst bed layer, thereby achieving the purpose of realizing the pressure drop of the catalyst bed layer.

In some embodiments, a line connecting the center of the first ellipse of the first corner 2 and the center of the first circumscribed circle 101 is perpendicular to the major axis of the first ellipse of the first corner 2, and a ratio of the major axis length of the first ellipse of the first corner 2 to the radius of the first circumscribed circle 101 is 0.2 to 1.

Wherein the first ellipse of the first corner 2 is indicated by a dotted line in the drawings.

In this embodiment, the first corner 2 of the catalyst shaped body 100 is a first ellipse, that is, the shape of the first corner 2 protruding from the first recesses 3 on both sides is the outwardly convex part of the first ellipse; by providing the elliptical first corner 2 and the ratio of the major axis length of the first ellipse of the first corner 2 to the radius of the first circumscribed circle 101 being 0.2 to 1, it is able to increase the porosity in the catalyst bed layer, reduce the pressure drop of the catalyst in the reactor bed layer, and improve the production capacity of the catalyst, while avoiding irregular edges and corners, and it is not easy to wear and tear during transportation and use, and the crushing resistance is improved, which is beneficial for ensuring structural integrity, effectively reducing the pressure drop of the catalyst bed layer, and the structure is simple and it is easy to produce.

Specifically, as shown in FIG. 1 to FIG. 18, the central through hole 1 is one of a circular through hole, an elliptical through hole, a polygonal through hole, and a polygonal star-shaped through hole having a shape similar to the cross-section.

In this embodiment, the central through hole 1 has a variety of selectable cross-sectional shapes, and a suitable shape of the central through hole 1 can be selected according to the porosity and mechanical strength requirements to meet more application scenario requirements and be more convenient and flexible to use.

For example, as shown in FIG. 1, FIG. 2, FIG. 7, FIG. 8, FIG. 13 and FIG. 14, the central through hole 1 is a circular through hole.

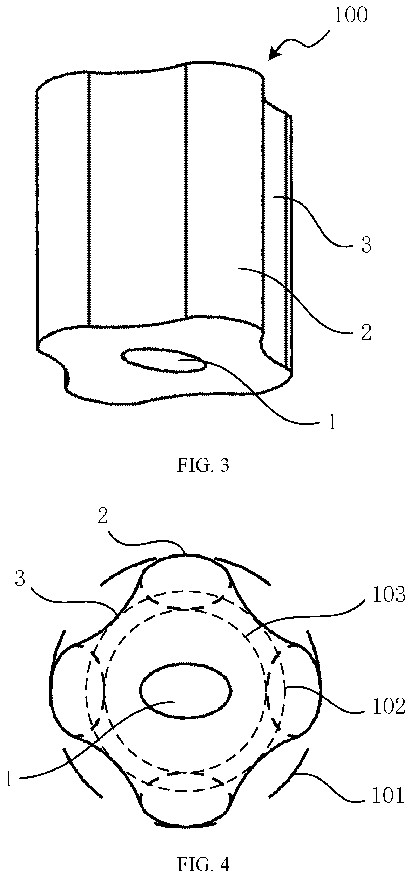

As shown in FIG. 3, FIG. 4, FIG. 9, FIG. 10, FIG. 15 and FIG. 16, the central through hole 1 is an elliptical through hole, and the major axis of the elliptical through hole is perpendicular to the symmetry axis of the catalyst shaped body 100.

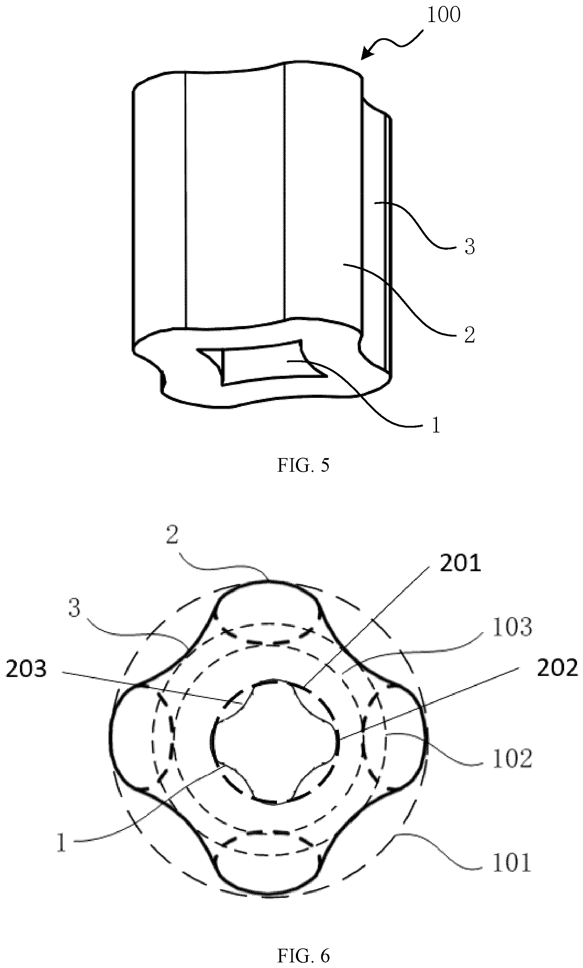

As shown in FIG. 5, FIG. 6, FIG. 11, FIG. 12, FIG. 17 and FIG. 18, the central through hole 1 is a polygonal star-shaped through hole having a shape similar to the cross-section of catalyst shaped body 100; wherein "similar" means that the contour of the polygonal star-shaped through hole is roughly the same as the outer contour of the cross-section of the catalyst shaped body 100, that is, the polygonal star-shaped through hole has a plurality of internal corners that have the same number as the first corners 2 and are arranged in a one-to-one correspondence, and also has a plurality of arc sides that have the same number as the first recesses 3 and are arranged in a one-to-one correspondence.

As shown in FIG. 6, the central through hole 1 has second corners 202 with the same number as the first corners 2, and second recesses 203 with the same number as the first recesses 3, the second corners defining a second circumscribed circle 201 of the central through hole 1, the first corners 2 and the second corners 202 being aligned in the circumferential direction, the first recesses 3 and the second recesses 203 being aligned in the circumferential direction, each second corner 202 being an outwardly convex part of second ellipse, each second corner 202 being tangent to the second circumscribed circle 201, and the second corners 202 being rotationally symmetric relative to a center of the second circumscribed circle 201, and the second recesses 203 being inwardly concave arcs tangent to two adjacent second corners 202.

Preferably, a ratio of a major axis to a minor axis of the second ellipse is equal to the ratio of the major axis to the minor axis of the first ellipse.

Preferably, the ratio of the area of the second circumscribed circle of the central through hole 1 to the area of the first circumscribed circle of the outer contour of the catalyst shaped body is 0.17 to 0.34.

The central through hole 1 may also be a polygonal through hole, the number of vertices of the polygonal through hole being the same as the number of the first corners 2 of the catalyst shaped body 100, the number of sides being also the same as the number of the first recesses 3, and the sides of the polygonal through hole being arranged in a one-to-one correspondence to the first recesses 3.

Specifically, the ratio of the inner radius of the central through hole 1 to the radius of the first circumscribed circle 101 is 0.2 to 1. Wherein when the central through hole 1 is a circular through hole, the inner radius of the central through hole 1 is the radius of the circle; when the central through hole 1 is an elliptical through hole, the inner radius of the central through hole 1 is the minor axis length of the ellipse.

In this embodiment, by providing the ratio of the inner radius of the central through hole 1 to the radius of the first circumscribed circle 101 to be 0.2 to 1, the catalyst shaped body 100 has a higher porosity, which reduces the pressure drop in the catalyst bed layer and improves the production capacity of the catalyst, at the same time, it is ensured that the catalyst shaped body 100 has sufficient mechanical strength and strong crushing resistance, and can ensure the structural integrity during catalyst transportation, filling and high space velocity operation, effectively reduces the pressure drop.

Specifically, as shown in FIGS. 1 to 18, each first recess 3 is tangent to the first inscribed circle 102, the first ellipse corresponding to each first corner 2 is tangent to the second inscribed circle 103, the first inscribed circle 102 and the second inscribed circle 103 are both concentric with the first circumscribed circle 101, and the radius of the first inscribed circle 102 is greater than the radius of the second inscribed circle 103.

In this embodiment, by providing the radius of the first inscribed circle 102 to be larger than the radius of the second inscribed circle 103, the degree of inward concavity of the first recess 3 can be limited, so as to avoid affecting the mechanical strength of the catalyst shaped body 100 by the first recess 3 being too concave causing the first corner 2 to be too convex, the mechanical stability is better, the crushing resistance of the catalyst shaped body 100 is ensured, and the increase in the pressure drop of the catalyst bed layer caused by catalyst breakage and wear is reduced.

In this embodiment, the catalyst shaped body 100 has a certain crushing resistance, wherein the lateral crushing strength is greater than 20 N/ particle, that is, the maximum crushing pressure of each catalyst particle is greater than 20 N, and it has good mechanical stability and strong crushing resistance, which effectively ensures the structural integrity of the catalyst and effectively reduces the pressure drop.

The catalyst of the present invention preferably has a central through hole, and effectively increases the outer surface area of the catalyst particles and the strength of the particles by the parameter design of the central through hole, further significantly improves the porosity of the catalyst bed layer, and alleviates the increase in pressure drop of bed layer in industrial equipment.

The central through hole of the catalyst of the present invention preferably has a contour similar to the outer contour of the catalyst, which can reduce the wall thickness of the catalyst and thus save costs.

The packing density of the catalyst of the present invention is reduced, the catalyst performance is improved, the product yield per unit mass of the catalyst is increased, and the production capacity of the catalyst is improved.

Geometric main body of the catalyst provided by the present invention is a cylinder, and the catalyst shaped body has good mechanical properties, is easy to manufacture, can be molded under low pressure, has high mechanical strength, and has strong crushing resistance; it has no irregular edges and corners, is easy to produce, has good wear resistance, is not easy to break, has good mechanical stability, reduces the loss of the catalyst shaped body during transportation and use, can ensure the structural integrity during transportation, filling and high space velocity operation, and effectively reduces the increase in pressure drop of catalyst bed layer caused by catalyst breakage and wear.

The catalyst shaped body 100 of the present invention is further described below by taking four-corner star-shaped low pressure drop vanadium phosphorus oxygen catalyst particles as a specific embodiment.

The low pressure drop vanadium phosphorus oxygen catalyst particles are simple to prepare, are compression molded by the vanadium phosphorus oxygen catalyst matrix powder or a mixture thereof with a carrier, a pore expander or a lubricant to obtain catalyst particle entities having the geometric shape of the catalyst shaped body 100 provided in the above embodiments, which are mainly used for the selective oxidation of hydrocarbons, especially for production of maleic anhydride by using oxidation of alkanes.

Wherein general flow of preparing process of low pressure drop vanadium phosphorus oxygen catalyst particles is as follows:

Vanadium-containing compound reacts with phosphide in an organic reducing solvent to produce a vanadium phosphorus oxygen catalyst matrix powder, which is molded according to the geometric shape of the catalyst molded body 100 provided in the above embodiment, and forms a catalyst molded body 100 after being molded, and then the catalyst molded body 100 can be converted into a finished catalyst after activation.

Maleic anhydride is an important organic chemical raw material widely used in production of thermosetting resins, unsaturated polyester resins, pesticides and fine chemical products, such as important intermediates for synthesis of $\gamma$-butyrolactone, tetrahydrofuran and 1, 4-butanediol. At present, maleic anhydride is produced using cheap and easily available butane as a raw material, and the process of producing maleic anhydride by oxidation of n-butane has the advantage of cheap raw materials, and also has the advantage of less environmental pollution and low production cost of maleic anhydride. Vanadium phosphorus oxygen catalyst is the most effective catalyst for the production of maleic anhydride by the oxidation of n-butane, and studies have shown that molding shape of the vanadium phosphorus oxygen catalyst plays an important role in the catalytic oxidation of n-butane.

Low pressure drop vanadium phosphorus oxygen catalyst particles are used for process for preparing maleic anhydride by oxidation of hydrocarbons (n-butane) or for preparing acrylic acid by condensation of acetic acid and formaldehyde in the fixed bed reactor in the petrochemical field.

According to the Ergun equation, pressure drop value is calculated as:

$$-\frac{dP}{dl} = \left( \frac{150}{Re_m} + 1.75 \right) \left( \frac{1-\varepsilon_B}{\varepsilon_B^3} \right) \left( \frac{\rho_g u_m^2}{d_s} \right)$$

Wherein P is a pressure, $-\dfrac{dP}{dl}$ is a pressure drop per unit length, $d_s$ is a catalyst equivalent diameter, $\varepsilon_B$ is a porosity of catalyst bed layer, $u_m$ is a linear velocity, $\rho_g$ is a gas density, and $Re_m$ is the Reynolds number. The catalyst bed layer pressure drop is mainly determined by the catalyst equivalent diameter $(d_s)$, the porosity of catalyst bed layer $(\varepsilon_B)$, and the linear velocity $(u_m)$, wherein the linear velocity is mainly determined by reaction conditions.

Changes in catalyst shape will influence changes in the catalyst equivalent diameter $(d_s)$ and the porosity of catalyst bed layer $(\varepsilon_B))$. For fixed bed reactors, the lateral crushing strength and natural filling crushing resistance of the catalyst must be guaranteed, otherwise the catalyst will be broken by factors such as vibration and force during use, and the dust generated will cause the porosity of catalyst bed layer to decrease, increasing the pressure drop. The lateral crushing strength of the catalyst according to the present invention is increased, and the natural filling crushing strength remains is unchanged, so the pressure drop is reduced.

As shown in FIG. 1 and FIG. 2, the first embodiment of the four-corner star-shaped low pressure drop vanadium phosphorus oxygen catalyst particles is obtained by molding according to the geometric shape of the catalyst shaped body 100 of the above embodiments.

The four-corner star-shaped low pressure drop vanadium phosphorus oxygen catalyst particles of the first embodiment have four first corners 2, the geometric main body enclosed by the four first corners 2 is a cylinder, the radius of the cylinder is measured to be 3 mm, that is, the radius of the first circumscribed circle 101 of the cross section is 3 mm; the height of the cylinder is 6 mm.

The four first corners 2 are each outwardly convex part of the first ellipse tangent to the first circumscribed circle 101, and the four outwardly convex ellipse parts have the same major axis length and minor axis length, wherein the major axis length is 2 mm and the minor axis length is 1.2 mm. The interval angle between every two adjacent first corners 2 is 90°.

The four-corner star-shaped low pressure drop vanadium phosphorus oxygen catalyst particle has a circular central through hole 1 which is continuously opened and extends parallel to the axis of the cylinder. The diameter of the central through hole 1 is 2 mm.

As shown in FIG. 3 and FIG. 4, the second embodiment of a four-corner star-shaped low pressure drop vanadium phosphorus oxygen catalyst particle is obtained by molding according to the geometric shape of the catalyst shaped body 100 of the above embodiments.

The four-corner star-shaped low pressure drop vanadium phosphorus oxygen catalyst particles of the second embodiment are different from the four-corner star-shaped low pressure drop vanadium phosphorus oxygen catalyst particles of the first embodiment in that the central through hole 1 is elliptical, the major axis length of the central through hole 1 is 2 mm, and the minor axis length is 1.6 mm.

As shown in FIG. 5 and FIG. 6, the third embodiment of the four-corner star-shaped low pressure drop vanadium phosphorus oxygen catalyst particles is obtained by molding according to the geometric shape of the catalyst shaped body 100 of the above embodiments.

The difference from the first and second embodiments is that the four-corner star-shaped low pressure drop vanadium phosphorus oxygen catalyst particles of the third embodiment have a central through hole 1 similar to the outer contour of the cross-section, and the ratio of the major axis to the minor axis of the second ellipse is equal to the ratio of the major axis to the minor axis of the first ellipse. The wall thickness of the low pressure drop vanadium phosphorus oxygen catalyst particles is controlled to be 2.5 mm.

The fourth embodiment is a four-corner star-shaped low pressure drop vanadium phosphorus oxygen catalyst particle similar in shape to the first embodiment, the difference is in that the radius of the cylinder is measured to be 5.5 mm, that is, the radius of the first circumscribed circle 101 of the cross section is 5.5 mm.

In order to highlight the effects of the present invention, Comparative Example 1, Comparative Example 2 and Comparative Example 3 are provided.

Comparative Example 1 is a Raschig ring (hollow cylindrical) vanadium phosphorus oxygen catalyst particle having a diameter of 5.5 mm, a hole diameter of 2.5 mm, and a height of 5.5 mm.

Comparative Example 2 and Comparative Example 3 are catalysts in reference to CN102784666A. The parameters of Comparative Example 2 and Comparative Example 3 are shown in Table 1 below:

Table 1: Parameters of Comparative Example 2 and Comparative Example 3

|  | H(mm) | R(mm) | r(mm) | N | $\alpha$(mm) | $\Phi$(mm) |
|---|---|---|---|---|---|---|
| Comparative Example 2 | 6 | 3 | 2.4 | 6 | 1.2 | 0 |
| Comparative Example 3 | 6 | 3 | 2.4 | 6 | 1.2 | 1.0 |

Wherein H is the height, R is the radius of the circumscribed circle, r is the radius of the inscribed circle, N is the number of outwardly convex circles in the outer contour, $\alpha$ is the radius of the outwardly convex circle, and $\Phi$ is the diameter of the central hole.

The vanadium phosphorus oxygen catalyst particles according to the first to fourth embodiments and Comparative Examples 1, 2 and 3 were molded and activated to obtain a finished vanadium phosphorus oxygen catalyst. First, the physical properties of the finished catalyst were measured to obtain the specific surface area, hole volume and crushing strength of the finished catalyst. The results are shown in Table 2 below:

Table 2: Specific surface area, hole volume and crushing strength of catalysts

| | First embodiment | Second embodiment | Third embodiment | Fourth embodiment | Comparative Example1 | Comparative Example2 | Comparative Example3 |
|---|---|---|---|---|---|---|---|
| Specific surface area ($m^2$/g) | 23.5 | 22.8 | 25.6 | 23.0 | 21.0 | 21.8 | 22.6 |
| Hole volume ($cm^3$/g) | 0.205 | 0.211 | 0.298 | 0.208 | 0.201 | 0.207 | 0.206 |
| Crushing strength(N) | 24.3 | 25.1 | 30.8 | 34.8 | 22 | 29.8 | 25.3 |

As can be seen, the first to fourth embodiments using the profile of the catalyst shaped body 100 of the present invention have larger specific surface areas and larger hole volumes compared with Comparative Examples 1, 2 and 3. Compared with Comparative Example 1, the crushing strength of the catalyst is significantly increased, and the crushing resistance is stronger, which reduces the loss of the catalyst shaped body 100 during transportation and use, and can ensure the structural integrity during transportation, filling and high space velocity operation, effectively reduces the increase in catalyst bed layer pressure drop caused by catalyst breakage and wear.

Subsequently, the catalyst particles of the first to fourth embodiments and Comparative Examples 1, 2 and 3 were respectively filled into a 5.5-meter-long tube fixed-bed reactor with an inner radius of 21 mm, and 1.5 v% n-butane/air mixture gas was introduced, and evaluation was carried out under the same pressure and space velocity conditions; after the equipment was stably operated for 2 hours, composition of the reaction product was analyzed by gas chromatography of the reaction product.

Wherein under the test conditions of reactor inlet pressure of 0.15 MPa and space velocity of 1600 $h^{-1}$, the measurement results are shown in Table 3 below:

Table 3: Test results (test conditions: reactor inlet pressure is 0.15 MPa and space velocity is 1600 $h^{-1}$)

| | first embodiment | second embodiment | third embodiment | fourth embodiment | Comparative Example 1 | Comparative Example 2 | Comparative Example 3 |
|---|---|---|---|---|---|---|---|
| Natural filling packing ratio (Kg/L) | 0.58 | 0.55 | 0.52 | 0.45 | 0.70 | 0.82 | 0.78 |
| Salt bath temperature (°C) | 410 | 412 | 408 | 420 | 415 | 414 | 416 |
| Conversion rate ($mol^{-1}$) | 85.5 | 86.2 | 85.5 | 85.1 | 85.3 | 85.2 | 85.1 |
| Selectivity | 67.9 | 68.4 | 71.2 | 66.2 | 68.2 | 68.6 | 67.2 |
| Pressure drop (KPa) | 53.2 | 51.0 | 45.5 | 40.3 | 78.8 | 80.1 | 79.3 |

As can be seen, compared with Comparative Examples 1, 2 and 3, the first to fourth embodiments using the catalyst shaped body 100 profile of the present invention, the catalyst packing ratio is significantly lower and the pressure drop of catalyst bed layer is significantly reduced; in addition, in the fourth embodiment, since the first circumscribed circle 101 of the cross section of the catalyst shaped body is too large, causing that the catalyst filling packing ratio is extremely low, the linear velocity of the reactants is too large, which in turn affects the reaction efficiency, and the salt bath temperature required to achieve the same reaction efficiency is relatively high. Therefore, compared with Comparative Examples 1, 2 and 3, the catalyst performance of the first to fourth embodiments of the catalyst shaped body 100 profile of the present invention is improved, and the yield of maleic anhydride per unit mass of catalyst is increased at a low salt bath temperature.

Under the test conditions of reactor inlet pressure of 0.15 MPa and space velocity of 2000 $h^{-1}$, the measurement results are shown in Table 4 below :

Table 4 : Test results (test conditions: reactor inlet pressure is 0.15 MPa and space velocity is 2000 $h^{-1}$)

| | First embodiment | second embodiment | third embodiment | fourth embodiment | Comparative Example 1 | Comparative Example 2 | Comparative Example 3 |
|---|---|---|---|---|---|---|---|
| Natural filling packing ratio (Kg/L) | 0.58 | 0.55 | 0.52 | 0.45 | 0.70 | 0.82 | 0.78 |

(continued)

| | First embodiment | second embodiment | third embodiment | fourth embodiment | Comparative Example 1 | Comparative Example 2 | Comparative Example 3 |
|---|---|---|---|---|---|---|---|
| Salt bath temperature (°C) | 415 | 414 | 411 | 422 | 417 | 417 | 418 |
| Conversion rate (mol$^{-1}$) | 82.5 | 83.1 | 82.9 | 82.0 | 82.3 | 83.2 | 82.1 |
| Selectivity | 68.3 | 68.9 | 71.8 | 67.1 | 69.3 | 68.9 | 68.2 |
| Pressure drop (KPa) | 72.1 | 64.3 | 60.5 | 56.2 | 96.5 | 98.1 | 97.3 |

As can be seen, compared with Comparative Examples 1, 2 and 3, the catalyst performance of the first to fourth embodiments using the catalyst shaped body 100 of the present invention is improved, and the yield of maleic anhydride per unit mass of catalyst is increased at a low salt bath temperature.

As can be seen, in the present invention, since the first corner and the first recess have different geometric shapes, this design can reduce the contact area between the catalyst particles to avoid the bite between the first corner and/or the first recess of the catalyst shaped body and the first recess and/or the first corner of the adjacent catalyst shaped body, thereby increasing the porosity of bed layer and reducing the filling packing ratio of the catalyst bed layer, thereby achieving the purpose of realizing the pressure drop of the catalyst bed layer.

The detailed description and the drawings or figures are supportive and descriptive of the present teachings, but the scope of the present teachings is defined solely by the claims. While some of the best modes and other embodiments for carrying out the present teachings have been described in detail, various alternative designs and embodiments exist for practicing the present teachings defined in the appended claims.

## Claims

1. A catalyst shaped body, comprising:

   a column body extending in a longitudinal direction, the column body having a cross section perpendicular to the longitudinal direction;
   wherein the cross section has a central through hole, at least four first corners (2) and first recesses (3) with the same number as the first corners;
   the at least four first corners are arranged at the same angular intervals along a circumferential direction to define a first circumscribed circle of an outer contour of the catalyst shaped body, each first corner is tangent to the first circumscribed circle, and the at least four first corners are rotationally symmetric with respect to a center of the first circumscribed circle;
   the first corners (2) and the first recesses are alternately arranged in the circumferential direction, the first corners (2) and the first recesses (3) have different geometric shapes, the first corners (2) are an outwardly convex part of a first ellipse with a ratio of a major axis to a minor axis greater than 1.2, and the first recesses (3) are an inwardly concave arc tangent to two adjacent first corners (2), so as to avoid bite between the first corners (2) and/or the first recesses (3) of the catalyst shaped body and the first recesses (3) and/or the first corners (2) of adjacent catalyst shaped bodies.

2. The catalyst shaped body according to claim 1, **characterized in that** a line connecting a center of the first ellipse and the center of the first circumscribed circle is perpendicular to the major axis of the first ellipse, and a ratio of a major axis length of the first ellipse to a radius of the first circumscribed circle is 0.2 to 1.

3. The catalyst shaped body according to claim 2, **characterized in that** the central through hole has second corners with the same number as the first corners and second recesses with the same number as the first recesses, the second corners define a second circumscribed circle of the central through hole, the first corners and the second corners are aligned in the circumferential direction, each second corner is tangent to the second circumscribed circle, and the second corners are rotationally symmetrical with respect to a center of the second circumscribed circle, the first recesses and the second recesses are aligned in the circumferential direction, each second corner is an outwardly convex part of a second ellipse, and the second recesses are an inwardly concave arc tangent to two adjacent second corners.

4. The catalyst shaped body according to claim 3, **characterized in that** a ratio of a major axis to a minor axis of the second ellipse is equal to the ratio of the major axis to the minor axis of the first ellipse.

5. The catalyst shaped body according to claim 4, **characterized in that** a ratio of an area of the second circumscribed circle of the central through hole to an area of the first circumscribed circle of the outer contour of the catalyst shaped body is 0.17 to 0.34.

6. The catalyst shaped body according to claim 1, **characterized in that** each first recess is tangent to a first inscribed circle, the first ellipse corresponding to each first corner is tangent to a second inscribed circle, the first inscribed circle and the second inscribed circle are both concentric with the first circumscribed circle, and a radius of the first inscribed circle is greater than a radius of the second inscribed circle.

7. The catalyst shaped body according to any one of claims 1 to 6, **characterized in that** a height of the catalyst shaped body in the longitudinal direction is greater than or equal to a radius of the first circumscribed circle of the outer contour of the catalyst shaped body.

8. The catalyst shaped body according to claim 7, **characterized in that** the radius of the first circumscribed circle of the outer contour of the catalyst shaped body is 2 mm to 5 mm.

9. The catalyst shaped body according to claim 8, **characterized in that** the radius of the first circumscribed circle of the outer contour of the catalyst shaped body is 3 mm to 4 mm.

10. The catalyst shaped body according to any one of claims 1 to 6, **characterized in that** the catalyst shaped body is filled in a reaction tube for catalytic use, and a ratio of a radius of the reaction tube to a radius of the first circumscribed circle is 2 to 7.

FIG. 1

FIG. 2

FIG. 3

FIG. 4

FIG. 5

FIG. 6

100

2

3

1

FIG. 7

2

3

103

102

101

1

FIG. 8

FIG. 9

FIG. 10

100

2

3

1

FIG. 11

2

3

103

1

102

101

FIG. 12

100

3

2

1

FIG. 13

2

3

103

102

1

101

FIG. 14

FIG. 15

FIG. 16

100

3

2

1

FIG. 17

2

3

103

102

1

101

FIG. 18

## INTERNATIONAL SEARCH REPORT

| International application No. |
| --- |
| **PCT/CN2023/105653** |

### A.    CLASSIFICATION OF SUBJECT MATTER

B01J35/02(2006.01)i

According to International Patent Classification (IPC) or to both national classification and IPC

### B.    FIELDS SEARCHED

Minimum documentation searched (classification system followed by classification symbols)

IPC:B01J

Documentation searched other than minimum documentation to the extent that such documents are included in the fields searched

Electronic data base consulted during the international search (name of data base and, where practicable, search terms used)

CNTXT, VEN, CJFD: 催化剂, 成形, 柱体, 中心通孔, 椭圆, 圆, 相切, catalyst, form, body, cylinder, center through-hole, ellipse, circle, tangent

### C.    DOCUMENTS CONSIDERED TO BE RELEVANT

| Category* | Citation of document, with indication, where appropriate, of the relevant passages | Relevant to claim No. |
| --- | --- | --- |
| X | CN 214076701 U (CHINA PETROCHEMICAL CO., LTD. et al.) 31 August 2021 (2021-08-31) description, paragraphs 9-21 | 1-10 |
| A | CN 1795989 A (CHINA PETROCHEMICAL CO., LTD. et al.) 05 July 2006 (2006-07-05) description, page 2 | 1-10 |
| A | US 2002189452 A1 (BENH-I) BENHAM, K. et al.19 December 2002 (2002-12-19) entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2023** | **27 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/105653**

| Patent document cited in search report | | | Publication date (day/month/year) | Patent family member(s) | | | Publication date (day/month/year) |
|---|---|---|---|---|---|---|---|
| CN | 214076701 | U | 31 August 2021 | None | | | |
| CN | 1795989 | A | 05 July 2006 | None | | | |
| US | 2002189452 | A1 | 19 December 2002 | US | 2004105790 | A1 | 03 June 2004 |
| | | | | US | 6923940 | B2 | 02 August 2005 |
| | | | | US | 6692552 | B2 | 17 February 2004 |

Form PCT/ISA/210 (patent family annex) (July 2022)

**REFERENCES CITED IN THE DESCRIPTION**

**Patent documents cited in the description**

- CN 102784666 A